# EUROPEAN PATENT APPLICATION

(11) **EP 1 601 200 A1**
(43) Date of publication of application: **30.11.2005**
(21) Application number: 04716783.8
(22) Date of filing: 03.03.2004
(51) Int. Cl.: H04N 7/24

(54) **TRANSMISSION CONTROL DEVICE AND METHOD, RECORDING MEDIUM, AND PROGRAM**

(30) Priority: 04.03.2003 JP 2003057428
(71) Applicant: SONY CORPORATION, Tokyo 141-0001 (JP)
(72) Inventor: FUTENMA, Satoshi, Shinagawa-ku, Tokyo 141-0001 (JP); YAMANE, Kenji, Shinagawa-ku, Tokyo 141-0001 (JP); KYUSOJIN, Hiroshi, Shinagawa-ku, Tokyo 141-0001 (JP)
(74) Representative: Melzer, Wolfgang
(86) International application number: PCT/JP2004/002651
(87) International publication number: WO 2004/080077

(57) **Abstract**

This invention relates to a transmission controlling apparatus, a transmission controlling method, a recording medium, and a program for instantaneously transmitting data while averting a so-called slow start. Video data acquired by a picture acquisition unit 21 is input to an initial rate determination unit 24 and a picture encoding unit 22 as outgoing data. An acceptable picture quality determination unit in the initial rate determination unit 24 determines a minimum acceptable picture quality acceptable to a user who views the video data sent from a transmission unit 11. A transmission rate determination unit in the initial rate determination unit 24 determines as an initial transmission rate the transmission rate that meets criteria for the minimum acceptable picture quality supplied from the acceptable picture quality determination unit, and forwards the determined rate to a rate control unit 25. In turn, the rate control unit 25 controls the transmission rate for a transmission unit 23 so that the unit 23 starts to send video data at the initial transmission rate supplied from the transmission rate determination unit 44. This invention applies illustratively to transmitting apparatuses for transmitting predetermined data.

## Description

### Technical Field

The present invention relates to a transmission controlling apparatus, a transmission controlling method, a recording medium, and a program. More particularly, the invention relates to a transmission controlling apparatus, a transmission controlling method, a recording medium, and a program for instantaneously transmitting data over a network while averting a so-called slow start.

### Background Art

Audio and video data (called multimedia data hereunder where appropriate) is transmitted from sender terminals to receiver terminals over networks such as the Internet. In such cases, the sender terminal is generally required to adjust the rate at which to transmit multimedia data to the receiver terminal in accordance with network traffic status. Otherwise, the receiver terminal would incur packet losses or propagation delays, triggering deterioration in the quality of the transmitted data.

To deal with that problem, the sender terminal controls the rate at which to transmit outgoing data. Generally, protocols such as TCP (Transmission Control Protocol) or UDP (User Datagram Protocol) are applied to the transmission of data over networks. TCP is a transport protocol that guarantees delivery of data and is highly reliable in data transmission. In addition, TCP offers arrangements for autonomously adjusting transmission rates in keeping with network status. In TCP-based communication, the sender terminal typically begins its data transmission by sending a single packet to the receiver terminal and waits for an acknowledgement (ACK) from the latter. Upon receipt of the acknowledgement, the sender terminal sends two packets to the receiver terminal and awaits another acknowledgement. In like manner, the sender terminal increments the number of transmitted packets by one in response to each acknowledgement received from the receiver terminal.

By the above method, however, the rate at which one terminal sends data to another terminal rises only gradually up to a rate at which the transmission stabilizes (the rate is called the stable transmission rate hereunder). This phenomenon is what is known as the slow-start problem.

As opposed to TCP, UDP is a protocol which, although often utilized in transmitting audio and video data, has no arrangements for autonomously adjusting the rate of data transmission in accordance with network status. To make up for the lacuna, a number of methods have been proposed by which to adjust the transmission rate under UDP.

A method called TFRC (TCP-Friendly Rate Control) is proposed by R. Rejaje, M. Handley and D. Estrin in "RAP: An end-to-end rate-based congestion control mechanism for real-time streams in the Internet," in Proc. of IEEE/INFOCOM'99, March 1999. This method, as with TCP, involves getting the sender side to estimate the state of network loads (traffic status) based on the information returned from the receiver side (called feedback information), whereby the amount of outgoing data (transmission rate) is adjusted autonomously. Because it uses the same scheme as TCP, the TFRC method is also subject to the slow-start problem.

Another method is proposed by J. Widmer in "Equation-based congestion control," Diploma Thesis, University of Mannheim, February 2000, <URL: http://www.icir.org/tfrc>. This method, too, involves gradually raising the rate of data transmission in response to acknowledgements from the receiver side. Thus the method also shares the slow-start problem with TCP.

Where multimedia data is transmitted on a streaming basis, the slow-start problem has two ramifications: it takes time to reach the stable transmission rate, and the data transmitted at a low rate can be meaningless on the receiver side. Illustratively, when streaming video data is transmitted at a low rate, picture quality can be so poor at the receiver side that pictures are not acceptable to the user in terms of quality. In such a case, the user may need to wait for pictures to become good enough to watch in quality, i.e., the user may need to wait for the transmission rate to become sufficiently high so that the quality of the transmitted pictures is acceptable to the user. With broadband connections coming into general use today, the content transmitted over the network is getting larger in quality so that the user's expectations for picture quality are higher than ever. The higher the quality of pictures desired by the user, the longer the user may be required to wait for satisfactory pictures to arrive because of the slow-start problem.

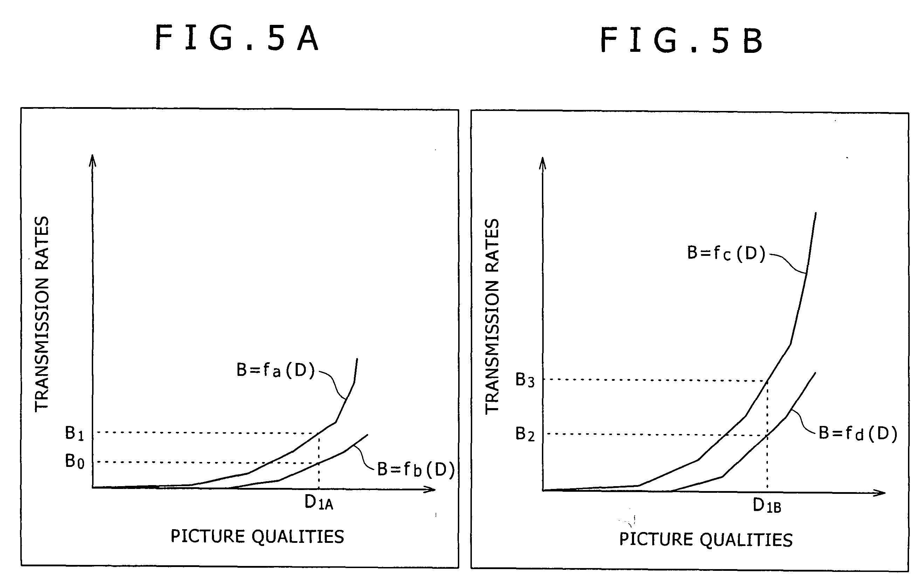

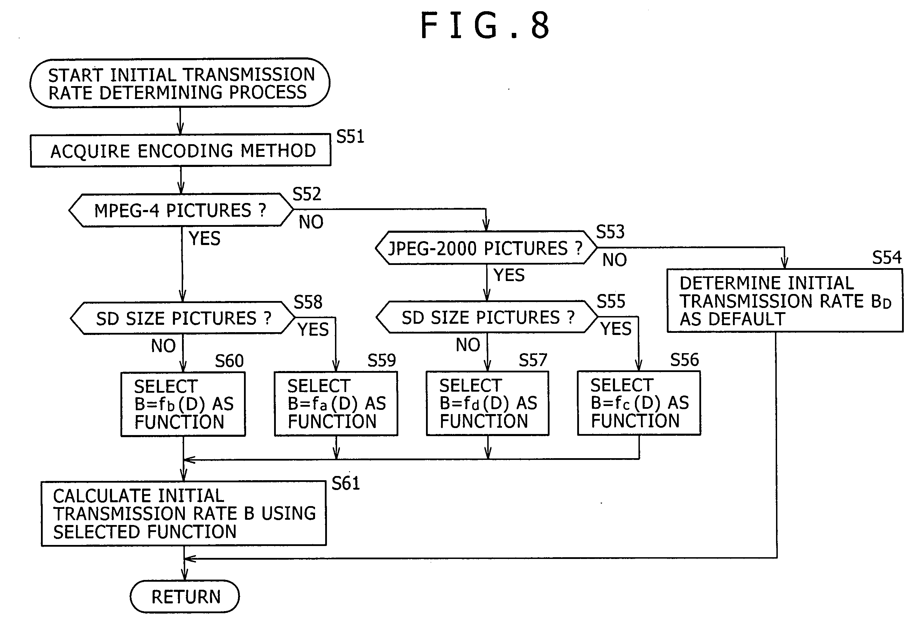

A technique has been proposed to solve the slow-start problem outlined above. The proposed technique involves estimating the bandwidths (transmission rates) of the sender and the receiver sides by use of a probe packet called a packet pair upon start of a data transmission (e.g., as disclosed in Japanese Patent Laid-open No. 2002-94567, page 14, Figs. 5 and 8).

While it bypasses the slow-start problem, the proposed technique above incurs a new problem. That is, from the time the probe packet is sent to the receiver side until an acknowledgement (ACK) is received for the transmitted packet (i.e., during the so-called round trip time), the sender side is incapable of starting to send target data such as video data.

Furthermore, the probe packet has nothing to do with the data desired by the receiver side. Transmitting such extra data can narrow the bandwidth over the network.

### Disclosure of Invention

The present invention has been made in view of the above circumstances and provides arrangements for instantaneously transmitting data over the network while averting the so-called slow start.

According to one embodiment of the present invention, there is provided a transmission controlling apparatus for controlling transmission of data. The apparatus includes: quality determining means for determining quality of the data in keeping with a property of the data; transmission rate determining means for determining a transmission rate in accordance with the quality determined by the quality determining means; and transmission rate controlling means for controlling the transmission rate of the data so that the data will start to be transmitted at the transmission rate determined by the transmission rate determining means.

Preferably, the data may constitute pictures, and the property of the data may be a picture property.

The picture property may preferably be at least one of an application property, a content property, and an imaging device property.

Preferably, the inventive transmission controlling apparatus may further include storing means for storing the data of which the quality is associated with the picture property. The quality determining means may determine the quality based on the data stored in the storing means.

Preferably, the data may constitute pictures encoded by a predetermined encoding method, and the transmission rate determining means may determine the transmission rate based on a picture size of the pictures and on a relationship between the quality associated with the encoding method on the one hand and the transmission rate on the other hand.

Preferably, the inventive transmission controlling apparatus may further include information inputting means for inputting information about the property of the data from outside the transmission controlling apparatus. The quality determining means may determine the quality in accordance with the information input by the information inputting means.

The transmission rate controlling means may preferably control the transmission rate of the data so that after the transmission of the data has started, the rate of the transmission will not be lowered below the transmission rate supplied from the transmission rate determining means.

The transmission rate controlling means may preferably control the transmission rate of the data so that in case of a communication time-out of the data, the transmission of the data will be resumed at the transmission rate determined by the transmission rate determining means.

According to another embodiment of the present invention, there is provided a transmission controlling method for controlling transmission of data. The method includes the steps of: determining quality of the data in keeping with a property of the data; determining a transmission rate in accordance with the quality determined in the quality determining step; and controlling the transmission rate of the data so that the data will start to be transmitted at the transmission rate determined in the transmission rate determining step.

According to a further embodiment of the present invention, there is provided a recording medium which stores in computer-readable fashion a program for controlling transmission of data. The program includes the steps of: determining quality of the data in keeping with a property of the data; determining a transmission rate in accordance with the quality determined in the quality determining step; and controlling the transmission rate of the data so that the data will start to be transmitted at the transmission rate determined in the transmission rate determining step.

According to an even further embodiment of the present invention, there is provided a program for controlling transmission of data and for causing a computer to execute a procedure including the steps of: determining quality of the data in keeping with a property of the data; determining a transmission rate in accordance with the quality determined in the quality determining step; and controlling the transmission rate of the data so that the data will start to be transmitted at the transmission rate determined in the transmission rate determining step.

Where the transmission controlling apparatus, transmission controlling method, recording medium, and program according to this invention are in use, the quality of data to be transmitted is determined in keeping with the property of the data in question. The rate at which to transmit the data is established in accordance with the data quality thus determined. Data transmission is controlled in such a manner that the data starts getting transmitted at the established transmission rate.

The transmission controlling apparatus may be either an independent apparatus or a block for handling transmission control processing in an apparatus.

### Brief Description of Drawings

Fig. 1 is a block diagram showing a typical configuration of a communication system to which this invention is applied;
Fig. 2 is a block diagram showing a typical structure of a transmitting apparatus practiced as a first embodiment of the invention and included in the diagram of Fig. 1;
Fig. 3 is a block diagram showing a typical structure of an initial rate determination unit included in the diagram of Fig. 2;
Fig. 4A is a tabular view that lists data stored in a database included in the diagram of Fig. 3;
Fig. 4B is a graphic representation showing data stored in the database shown in Fig. 3;
Fig. 5A is a graphic representation showing relations between transmission rates used by the transmission rate determination unit in Fig. 3 on the one hand, and picture qualities on the other hand;
Fig. 5B is another graphic representation showing relations between transmission rates used by the transmission rate determination unit in Fig. 3 on the one hand, and picture qualities on the other hand;
Fig. 6 is a flowchart of steps constituting a transmission rate determining process performed by the transmitting apparatus in Fig. 1;
Fig. 7 is a flowchart of steps constituting an acceptable picture quality determining process in step S2 of Fig. 6;
Fig. 8 is a flowchart of steps constituting an initial transmission rate determining process in step S3 of Fig. 6;
Fig. 9 is a graphic representation showing relations between the elapsed time since the start of transmission by the transmitting apparatus of Fig. 1 on the one hand and transmission rates on the other hand, as well as relations between the elapsed time since the start of transmission by a conventional setup on the one hand and transmission rates on the other hand;
Fig. 10 is a block diagram showing a typical structure of a transmitting apparatus practiced as a second embodiment of the invention and included in the diagram of Fig. 1;
Fig. 11 is a block diagram showing a typical structure of an initial rate determination unit included in the diagram of Fig. 10; and
Fig. 12 is a block diagram showing a typical structure of a computer to which this invention is applied.

### Best Mode for Carrying out the Invention

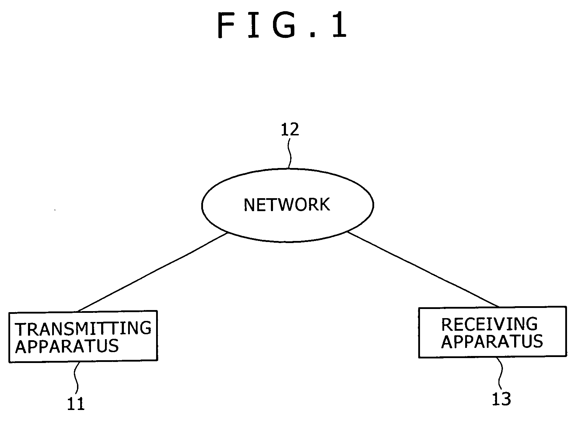

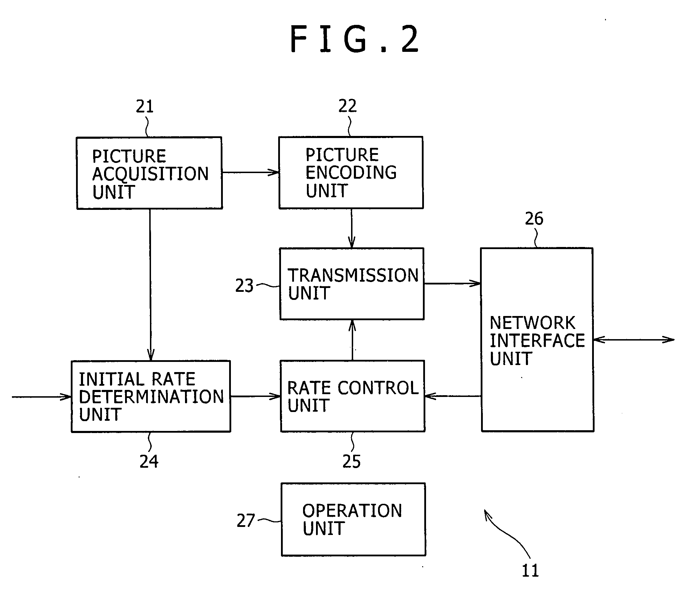

Fig. 1 shows a typical configuration of a communication system to which this invention is applied. In Fig. 1, a transmitting apparatus 11 is connected to a receiving apparatus 13 via a network 12 such as the Internet. A picture acquisition unit 21 (Fig. 2) in the transmitting apparatus 11 acquires pictures. The apparatus 11 encodes the acquired pictures using a suitable encoding method such as MPEG-4 (Moving Picture Experts Group Phase 4) or JPEG (Joint Photographic Experts Group) 2000, thus generating packets constituting the encoded video data. The transmitting apparatus 11 transmits the generated packets to the receiving apparatus 13 over the network 12. From the receiving apparatus 13, the transmitting apparatus 11 receives feedback information such as acknowledgements (ACK) for the packets having been sent.

The receiving apparatus 13 receives the packets from the transmitting apparatus 11, acquires video data from the received packets, and has the data displayed on a display unit (not shown) such as a CRT (Cathode Ray Tube) unit or an LCD (Liquid Crystal Display). In response to the packets received from the transmitting apparatus 11, the receiving apparatus 13 generates feedback information such as acknowledgements (ACK) and returns the feedback information to the transmitting apparatus 11.

For purpose of simplification and illustration, the transmitting apparatus 11 is shown independent of the receiving apparatus 13 in this description. In practice, however, the transmitting apparatus 11 may be designed also to function as the receiving apparatus 13 and the receiving apparatus 13 may also be given the capabilities of the transmitting apparatus 11.

Fig. 2 shows a typical structure of the transmitting apparatus 11 practiced as the first embodiment of the invention. An operation unit 27 accepts the user's operation input and notifies relevant blocks in the apparatus of the operation information corresponding to the user's operation thus accepted. Illustratively, by manipulating the operation unit 27, the user designates a video data compression method (i.e., encoding method) such as MPEG-4 or JPEG 2000 for use in sending video data to the receiving apparatus 13 (Fig. 1). Information designating the compression method (encoding method) is supplied from the operation unit 27 to a picture encoding unit 22 and an initial rate determination unit 24. The operation unit 27 also supplies the initial rate determination unit 24 with a property of the application set by the user manipulating the operation unit 27. The properties of the application will be discussed later.

The picture acquisition unit 21 is formed illustratively by a camcorder or a digital video camera. The picture acquisition unit 21 takes pictures of a subject and supplies the picture encoding unit 22 and initial rate determination unit 24 of the video data constituting the imaged object. The video data is typically composed of a brightness signal (Y), of the difference between the brightness signal and a red component (U), and of the difference between the brightness signal and a blue component (V) in the YUV format.

As described, when the user designates the encoding method by manipulating the operation unit 27, the information denoting the designated encoding method is supplied from the operation unit 27 to the picture encoding unit 22. The picture encoding unit 22 encodes the video data coming from the picture acquisition unit 21 through the use of the encoding method such as MPEG-4 or JPEG 2000 designated and supplied from the operation unit 27. The video data thus encoded (called the encoded data hereunder) is forwarded from the picture encoding unit 22 to a transmission unit 23.

Given the encoded data from the picture encoding unit 22, the transmission unit 23 splits the received data to packetize into a plurality of packets called data packets. The transmission unit 23 prefixes each of the generated data packets with a packet head of TCP/IP (Transmission Control Protocol/Internet Protocol) or UDP/IP (User Datagram Protocol/Internet Protocol). In keeping with a timing command coming from a rate control unit 25, to be described later, the transmission unit 23 transmits the data packets each furnished with the packet header (the packet header-prefixed packets will simply called the packets hereunder) to the receiving apparatus 13 through a network interface unit 26.

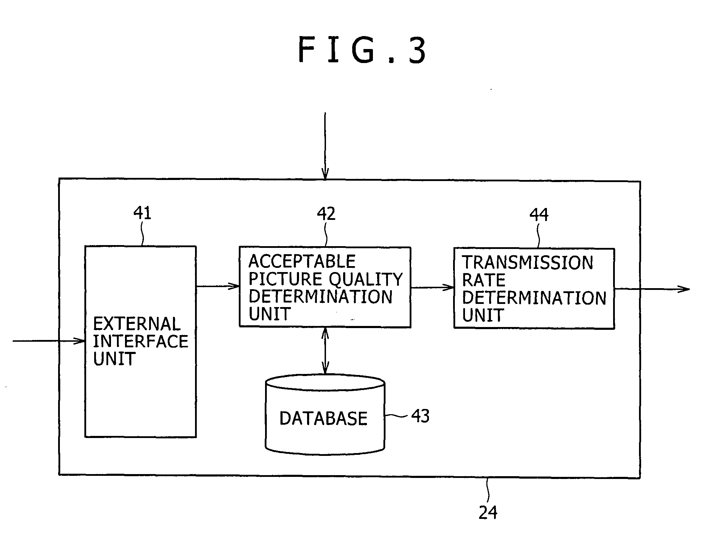

The initial rate determination unit 24 is supplied with picture-related properties both from the picture acquisition unit 21 and from outside the transmitting apparatus 11. The initial rate determination unit 24 is also fed by the operation unit 27 with the information denoting the encoding method selected by the user manipulating the operation unit 27. Based on the property of the pictures in question and on the designated encoding method, the initial rate determination unit 24 determines a minimum picture quality acceptable to the user who views the pictures received by the receiving apparatus 13. Furthermore, the initial rate determination unit 24 determines a transmission rate that satisfies the minimum picture quality and supplies the determined transmission rate to the rate control unit 25 as an initial transmission rate. Structural details of the initial rate determination unit 24 and specific picture properties will be discussed later in reference to Fig. 3. In the ensuing description, the lowest quality of pictures acceptable to the user viewing the pictures will be called the minimum acceptable picture quality.

The rate control unit 25 controls the transmission rate at which the transmission unit 23 transmits packets. More specifically, when the transmission unit 23 transmits a first packet, the rate control unit 25 supplies the transmission unit 23 with a timing command for causing the first packet to be transmitted at the initial transmission rate fed from the initial rate determination unit 24. For transmission of the second and subsequent packets, the rate control unit 25 determines a transmission rate based on the feedback information coming from the receiving apparatus 13 through the network interface unit 26. The rate control unit 25 then supplies the transmission unit 23 with a timing command such that the packets will be transmitted at the determined transmission rate.

When the display unit displays the video data transmitted from the transmitting apparatus 11 to the receiving apparatus 13 at the initial transmission rate, the quality of the displayed pictures (i.e., picture quality) is the lowest quality appropriated for streaming data. That is because the initial transmission rate is determined as representative of the lowest picture quality acceptable to the user viewing the received pictures. If the pictures were transmitted at a rate lower than the initial transmission rate, the quality of the pictures would be less than that is acceptable to the user. That means the rate control unit 25 cannot let the transmission rate at which the transmission unit 23 sends packets become lower than the initial transmission rate. In other words, the initial transmission rate is both the rate at which the transmission unit 23 starts data transmission and the lowest limit of transmission rates for communication. The rate control unit 25 thus determines adaptively the transmission rate in keeping with the feedback information coming from the receiving apparatus 13 through the network interface unit 26, making sure that the determined rate does not become lower than the initial transmission rate supplied from the initial rate determination unit 24.

It might happen that the feedback information corresponding to the packets sent by the transmission unit 23 is not received by the network interface unit 26, i.e., that a communication time-out is detected between the transmitting apparatus 11 and the receiving apparatus 13, so that the rate control unit 25 cannot determine the rate at which to transmit the next packet based on the feedback information. In such a case, the rate control unit 25 resets the transmission rate at which the transmission unit 23 sends the next packet, to the initial transmission rate supplied from the initial rate determination unit 24. The transmission unit 23 is then controlled to transmit the next packet at the initial transmission rate thus supplied.

The network interface unit 26 outputs the packets coming from the transmission unit 23 to the receiving apparatus 13 over the network 12. The network interface unit 26 also gives the rate control unit 25 the feedback information sent from the receiving apparatus 13 over the network 12.

Fig. 3 is a block diagram showing a typical internal structure of the initial rate determination unit 24 included in Fig. 2.

Based on the property of the pictures being acquired by the picture acquisition unit 21 (Fig. 2), the initial rate determination unit 24 first determines the lowest picture quality acceptable to the user (i.e., minimum acceptable picture quality) viewing the pictures received by the receiving apparatus 13 (Fig. 1). The initial rate determination unit 24 then decides on a transmission rate that satisfies the picture quality thus determined and supplies the rate control unit 25 (Fig. 2) with that rate as the initial transmission rate.

The picture property may be any one of an application property, a content property, and an imaging device property.

The application property is one of, say, four categories of content represented by teleconference, news program, baseball telecast, and soccer telecast. Typically, the news program is a program that shows a person or persons in the middle of the screen against a background that moves sporadically. The teleconference is a program that shows a person or persons in the middle of the screen against a background that remains mostly static. Because of a high demand for depicting the facial expressions of the people being imaged, the picture quality required of the teleconference is higher than that of the news program. Compared with the baseball telecast, the soccer telecast is required to emphasize two teams being constantly in motion on a single playing field. That means the picture quality required of the soccer telecast emphasizing movements is lower than that of the baseball telecast. The user designates the application property (e.g., teleconference, news program, baseball telecast, or soccer telecast) by manipulating the operation unit 27. The information thus designated is supplied from the operation unit 27 to an acceptable picture quality determination unit 42.

The property of content represents a degree of the visual noise in content as perceived by the humans. Illustratively, pictures of rapid movements or pictures full of small details are not perceived by the humans to be as much degraded in quality as the high compression rate in use would suggest. Defining the property of content thus involves taking into consideration the characteristics of the humans' sense of sight. The property of a given content may be represented illustratively by the degree of rapidity of motions in the pictures of that content. The rapidity of motions in pictures is typically obtained by first extracting frame-by-frame pictures at predetermined intervals from the video data fed from the picture acquisition unit 21 to the initial rate determination unit 24, and by acquiring chronologically the differences between the frame pictures in terms of correspondingly moving pixels found therebetween.

The property of an imaging device signifies how much the device affects the perceived noise in content. Illustratively, pictures taken by a rapidly moving digital video camera are not perceived by the humans to be as corrupted in quality as the elevated compression rate in use would imply. If the picture acquisition unit 21 is a digital video camera, information indicating whether the camera was moving or fixed while taking pictures may be adopted as the imaging device property. That information may illustratively be represented by the traveling speed of the digital video camera. When acquired outside the transmitting apparatus 11, the value of the camera speed may be supplied to an external interface unit 41. If the digital video camera was fixed and stationary, information indicating that the traveling speed of the camera is zero is sent to the external interface unit 41. Whereas the property of the imaging device is similar to the property of content, it is easier to obtain the traveling speed of the device as an objectively measured value than a value representative of the content property.

The external interface unit 41 receives the above-described imaging device property (i.e., traveling speed) from outside the transmitting apparatus 11, and forwards the received property to the acceptable picture quality determination unit 42.

Based on the video data fed from the picture acquisition unit 21, the acceptable picture quality determination unit 42 calculates the above-mentioned picture motions (i.e., content property). In reference to a database 43, the acceptable picture quality determination unit 42 determines a minimum acceptable picture quality based on the application property sent from the operation unit 27, on the picture motions (i.e., content property) calculated from the video data coming from the picture acquisition unit 21, and on the traveling speed (i.e., imaging device property) supplied from the external interface unit 41. The minimum acceptable picture quality thus determined is forwarded from the acceptable picture quality determination unit 42 to a transmission rate determination unit 44. For this embodiment of the invention, it is assumed that the application property is selected from four options, i.e., teleconference, news program, baseball telecast, and soccer telecast; that the content property is furnished by the picture motions; and that the imaging device property is provided by the traveling speed of the picture acquisition unit 21.

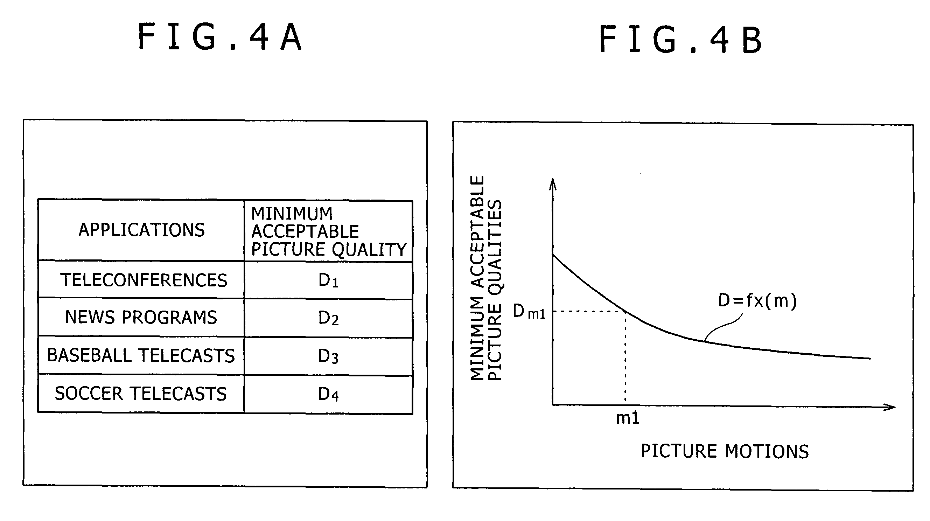

The database 43 is arranged to retain in advance a table associating application properties with minimum allowable picture qualities, as well as data denoting relations between picture motions and the minimum allowable picture qualities, as shown in Figs. 4A and 4B. The table and the data in the database 43 have been obtained by carrying out experiments with an indefinite number of users and by statistically processing what the experiments showed, i.e., the picture qualities generally acceptable to the user for different categories of content. Illustratively, baseball telecasts with varying picture qualities were shown to the users participating in the experiments. In response, the users decided on the picture qualities deemed acceptable for their viewing. The resulting data was tallied up to establish the picture quality generally deemed acceptable to the user viewing the baseball telecast. The picture quality may be represented illustratively by the S/N ratio (Signal to Noise Ratio) of pictures.

Fig. 4A shows a table that associates application properties with minimum acceptable picture qualities. When the application property denotes teleconferences, the corresponding minimum acceptable picture quality is set to D₁. For the application property denoting news programs, the corresponding minimum acceptable picture quality is set to D₂. Likewise, the minimum acceptable picture quality is set to D₃ for the application property denoting baseball telecasts and to D₄ for the application property denoting soccer telecasts. Although this embodiment of the invention adopts four application properties corresponding to the categories of teleconferences, news programs, baseball telecasts, and soccer telecasts, this is not limitative of the invention. Alternatively, other categories may be added as needed such as concert telecasts.

Fig. 4B graphically shows relations between picture motions as the content property on the one hand, and minimum acceptable picture qualities on the other hand. The relationship between the picture motion m and the minimum acceptable picture quality D is defined by the expression D = fₓ(m) based on the function fₓ() as shown in Fig. 4B and is held in the database 43. For example, suppose that the acceptable picture quality determination unit 42 has calculated m1 as the picture motion based on the video data supplied from the picture acquisition unit 21. In that case, the acceptable picture quality determination unit 42,obtains the minimum acceptable picture quality Dₘ₁ corresponding to the picture motion m1 through the use of the function D = fₓ (m) indicated in Fig. 4B.

Although the figures above show no example of data associating traveling speeds as the property of the imaging device with minimum acceptable picture qualities, such relations can also be expressed in a manner similar to what is shown in Fig. 4B. The only difference between traveling speeds and picture motions is whether the moving object is the picture acquisition unit 21 (i.e., traveling speed) or the subject being imaged (picture motion). For that reason, the relationship between the traveling speed m and the minimum acceptable picture quality D is also defined by the expression D = fₓ(m) in Fig. 4B, and the traveling speed will not be discussed further.

Alternatively, the relationship between picture motions and minimum acceptable picture qualities may be defined not by the function fₓ() (i.e., D = fₓ(m) in Fig. 4B) but by a scheme whereby picture motions are split into predetermined ranges associated with varying minimum acceptable picture qualities. Under this scheme, the relations between the picture motions and the minimum acceptable picture qualities may be expressed in a table such as the one in Fig. 4A.

As described, in reference to the database 43, the acceptable picture quality determination unit 42 determines a minimum acceptable picture quality Dᵢ (i = one of 1 through 4) based on the application property and another minimum acceptable picture quality Dₘ₁ based on the content property. With the minimum acceptable picture qualities Dᵢ and Dₘ₁ thus determined, the acceptable picture quality determination unit 42 decides on a definitive minimum acceptable picture quality D and supplies it to the transmission rate determination unit 44. Illustratively, the definitive minimum acceptable picture quality D may be determined by selecting whichever is the higher of the minimum acceptable picture quality Dᵢ (i = one of 1 through 4) derived from the application property and the minimum acceptable picture quality Dₘ₁ derived from the picture motion (traveling speed) based on the content property (picture quality).

The database 43 should preferably be updated periodically. That is because subsequent experiments and experiences are expected to prompt changes in the table that associates application properties with minimum acceptable picture qualities, as well as in the relations between content properties and the minimum acceptable picture qualities. Illustratively, the database 43 may be stored on a removable storage medium. This allows the storage medium, along with the database 43 held thereon, to be replaced when any of the data in the database 43 has been updated. As another alternative, the database 43 may be connected to the network 12 and updated by acquiring updated data from servers or like sources on the network 12.

Returning to Fig. 3, the transmission rate determination unit 44 in the initial rate determination unit 24 is supplied with information denoting the compression method (i.e., encoding method) for use in compressing video data. The method-designating information is set by the user manipulating the operation unit 27 and is sent from the operation unit 27. As in the case of the acceptable picture quality determination unit 42, the transmission rate determination unit 44 is fed with the video data acquired by the picture acquisition unit 21. From the video data supplied by the picture acquisition unit 21, the transmission rate determination unit 44 obtains a picture size such as the SD (Standard Definition) size or SIF (Source Input Format) size. Based on the acquired picture size and on the encoding method sent from the operation unit 27, the transmission rate determination unit 44 decides on the transmission rate corresponding to the quality (minimum acceptable picture quality) supplied from the acceptable picture quality determination unit 42. The transmission rate thus determined is supplied from the transmission rate determination unit 44 to the rate control unit 25 (Fig. 2) as the initial transmission rate. It should be noted that the SD size represents 720 by 480 pixels per picture taken and the SIF size denotes 360 by 240 pixels per picture.

What follows is a discussion of relations between the picture size and picture compression rate on the one hand, and bandwidths (i.e., transmission rates) on the other hand. With all other conditions made equal, the SD size picture obviously requires a greater bandwidth (i.e., higher transmission rate) than the SIF size picture when they are transmitted. When video data is sent from the transmitting apparatus 11 to the receiving apparatus 13, the data is compressed by the picture encoding unit 22 as mentioned above before being output onto the network 12. It follows that raising the compression rate at which the picture encoding unit 22 compresses (i.e., encodes) the video data reduces the bandwidth (transmission rate) necessary for transmitting the data over the network 12. However, higher compression rates used by the picture encoding unit 22 for its compressing (encoding) process translate into poorer picture qualities. In other words, the relations between picture qualities and transmission rates are specific to each picture size and encoding method (compression rate), as depicted in Figs. 5A and 5B.

Fig. 5A shows relations between the picture quality D for SD and SIF size pictures on the one hand, and the transmission rate B on the other hand, with MPEG-4 adopted as the encoding method. Fig. 5B indicates relations between the picture quality D for SD and SIF size pictures on the one hand, and the transmission rate B on the other hand, with JPEG 200 selected as the encoding method.

In Fig. 5A, the relationship between the picture quality and the transmission rate is defined by the function B = fₐ(D) where the picture size acquired by the transmission rate determination unit 44 based on the video data coming from the picture acquisition unit 21 is the SD size, i.e., where the picture acquisition unit 21 outputs SD size pictures. The relationship between the picture quality and the transmission rate is defined by the function B = f_{b}(D) where the picture size obtained by the transmission rate determination unit 44 based on the video data from the picture acquisition unit 21 is the SIF size, i.e., where the picture acquisition unit 21 outputs SIF size pictures. It follows that when the picture quality (minimum acceptable picture quality) supplied from the minimum acceptable picture quality determination unit 42 to the transmission rate determination unit 44 is D_{1A}, the transmission rate is defined by the function B₁ = fₐ(D_{1A}) if the pictures have the SD size, or by Bo = f_{b}(D_{1A}) if the pictures have the SIF size.

In Fig. 5B, the relationship between the picture quality and the transmission rate is defined by the function B = f_{c}(D) where the picture size acquired by the transmission rate determination unit 44 based on the video data coming from the picture acquisition unit 21 is the SD size, i.e., where the picture acquisition unit 21 outputs SD size pictures. The relationship between the picture quality and the transmission rate is defined by the function B = f_{d}(D) where the picture size obtained by the transmission rate determination unit 44 based on the video data from the picture acquisition unit 21 is the SIF size, i.e., where the picture acquisition unit 21 outputs SIF size pictures. It follows that when the picture quality (minimum acceptable picture quality) supplied from the minimum acceptable picture quality determination unit 42 to the transmission rate determination unit 44 is D_{1B}, the transmission rate is defined by the function B₃ = f_{c}(D_{1B}) if the pictures have the SD size, or by B₂ = f_{d}(D_{1B}) if the pictures have the SIF size.

The data representative of the relations between picture qualities and transmission rates as indicated in Figs. 5A and 5B is held inside the transmission rate determination unit 44. Based on these relations with regard to the size and encoding method of the pictures acquired by the picture acquisition unit 21, the transmission rate determination unit 44 determines the transmission rate corresponding to the minimum acceptable picture quality supplied from the acceptable picture quality determination unit 42. The transmission rate thus determined is sent from the transmission rate determination unit 44 to the rate control unit 25 as the initial transmission rate.

For this embodiment of the invention, two picture sizes are assumed, i.e., SD size and SIF size, with respect to the pictures taken by the picture acquisition unit 21. However, this is not limitative of the invention. Alternatively, other sizes may be adopted, such as the HD (High Definition) size (denoting 1920 by 1080 pixels).

The video data encoding method (compression method) designated by the user manipulating the operation unit 27 is not limited to MPEG-4 or JPEG 2000. Other encoding methods may also be adopted, such as MPEG-2.

If any of these alternative picture sizes and encoding methods is to be adopted, the relations between picture qualities and transmission rates regarding the new picture size and/or encoding method will be set anew in the transmission rate determination unit 44 as plotted in Figs. 5A and 5B. For any picture size, any encoding method (compression method), or any compression rate that may be adopted, the higher the picture quality, the higher the transmission rate required (i.e., the broader the bandwidth),

Although the relations between the minimum acceptable picture quality and the transmission rate with respect to the picture size and encoding method of interest as depicted in Figs. 5A and 5B are assumed to be established inside the transmission rate determination unit 44, this is not limitative of the invention. Alternatively, these relations may be placed in the database 43 from which they may be retrieved as needed, just like the relations between minimum acceptable picture qualities and application properties as well as the relations between minimum acceptable picture qualities and picture motions indicated in Figs. 4A and 4B.

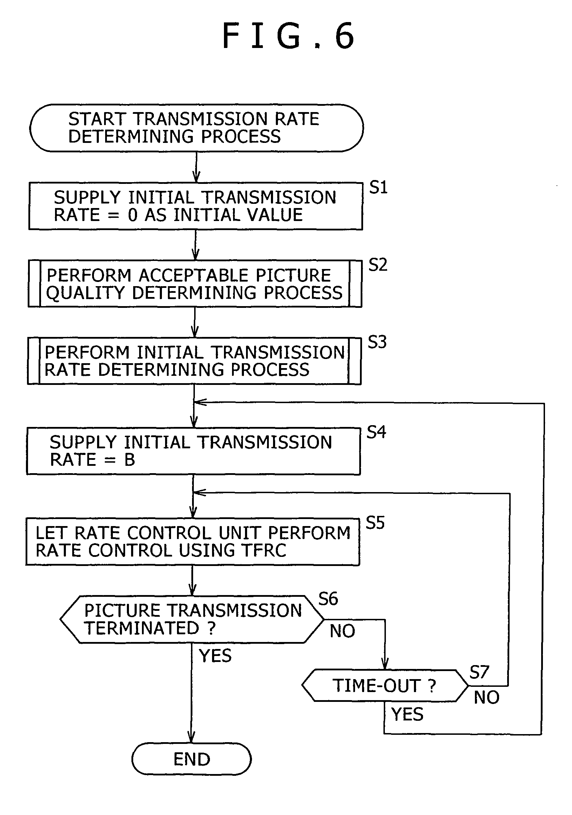

Referring to the flowchart of Fig. 6, the transmission rate determining process performed by the transmitting apparatus 11 will now be described. This process is initiated either by the user manipulating the operation unit 27, or by the transmitting apparatus 11 starting to send video data in response to a request from the receiving apparatus 13.

In step S1, the initial rate determination unit 24 sets the initial transmission rate to zero and supplies it to the rate control unit 25 as the initial value. Control is passed from step S1 to step S2.

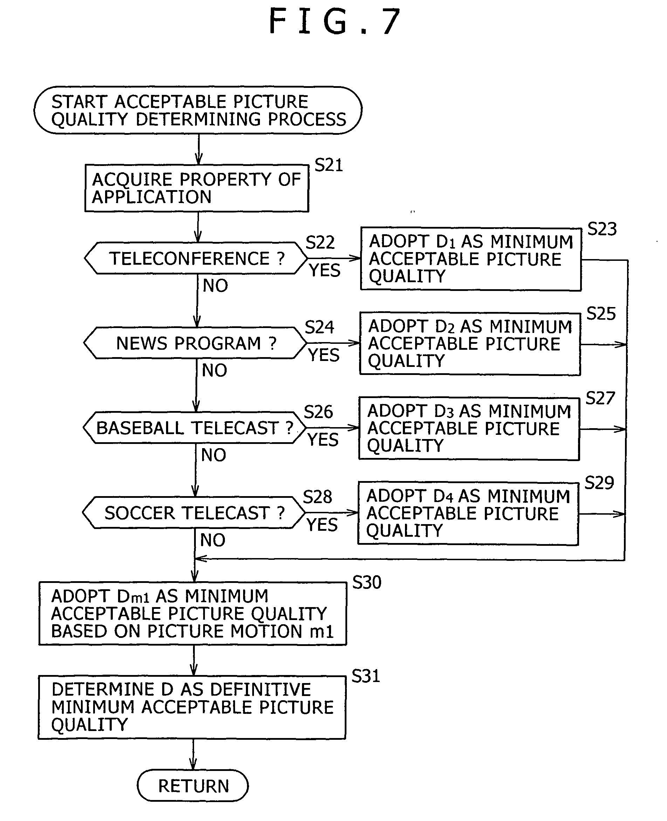

In step S2, the acceptable picture quality determination unit 42 in the initial rate determination unit 24 carries out an acceptable picture quality determining process. Step S2 is followed by step S3. The acceptable picture quality determining process, to be discussed later in detail with reference to Fig. 7, allows the acceptable picture quality determination unit 42 to determine a minimum acceptable picture quality based on the application property and picture motion in effect. The minimum acceptable picture quality thus determined is supplied to the transmission rate determination unit 44.

In step S3, the transmission rate determination unit 44 carries out an initial transmission rate determining process based on the minimum acceptable picture quality supplied from the acceptable picture quality determination unit 42 in step S2. Control is passed from step S3 to step S4. It is assumed that the initial transmission rate determined in the initial transmission rate determining process is represented by reference character B. The initial transmission rate determining process will be discussed later in detail with reference to Fig. 8.

In step S4, the transmission rate determination unit 44 supplies the rate control unit 25 with the initial transmission rate B determined by the unit 44 in step S3. Step S4 is followed by step S5.

In step S5, the rate control unit 25 carries out rate control by resorting to the TFRC method. More specifically, the rate control unit 25 gives the transmission unit 23 a timing command causing the unit 23 to establish the initial transmission rate B that was sent from the transmission rate determination unit 44 in step S4. Control is passed from step S5 to step S6.

In step S6, the rate control unit 25 checks to determine whether transmission of the video data acquired by the picture acquisition unit 21 has ended, i.e., whether the packets sent from the transmission unit 23 to the receiving apparatus 13 through the network interface unit 26 have been exhausted. If the transmission of the video data is not found to have ended in step S6, step S7 is reached. In step S7, the rate control unit 25 checks to determine whether a time-out has occurred, i.e., whether feedback information is supplied from the network interface unit 26 in response to the packets sent by the transmission unit 23.

If no time-out is detected in step S7, the rate control unit 25 returns to step S5 and repeats steps S5 through S7. During the process, the rate control unit 25 determines adaptively the transmission rate based on the feedback information coming from the network interface unit 26. For transmission rate control, the rate control unit 25 gives the transmission unit 23 a timing command causing the unit 23 to established the transmission rate thus determined.

If a time-out is detected in step S7, i.e., if the rate control unit 25 is not supplied with feedback information from the network interface unit 26 in response to the packets sent by the transmission unit 23, then the rate control unit 25 returns to step S4 and repeats the subsequent steps. That is, the rate control unit 25 resets the transmission rate to the initial transmission rate B for transmission rate control.

When the transmission of the video data is found to have ended in step S6, the transmission rate determining process is terminated.

The acceptable picture quality determining process performed by the acceptable picture quality determination unit 42 in step S2 of Fig. 6 is described below with reference to the flowchart of Fig. 7.

In step S21, the acceptable picture quality determination unit 42 acquires the application property supplied from the operation unit 27. Control is passed from step S21 to step S22.

In step S22, the acceptable picture quality determination unit 42 checks to determine whether the application property acquired in step S21 is representative of the teleconference. If in step S22 the application property is found to represent the teleconference, the acceptable picture quality determination unit 42 goes to step S23. In step S23, the acceptable picture quality determination unit 42 adopts (i.e., determines) D₁ as the minimum acceptable picture quality by referencing the table which resides in the database 43 and is shown in Fig. 4A. From step S23, control is passed on to step S30.

If in step S22 the application property is not found to be representative of the teleconference, step S24 is reached. In step S24, the acceptable picture quality determination unit 42 checks to determine whether the application property acquired in step S21 is representative of the news program. If in step S24 the application property is found to represent the news program, the acceptable picture quality determination unit 42 goes to step S25. In step S25, the acceptable picture quality determination unit 42 adopts D₂ as the minimum acceptable picture quality by referencing the table which resides in the database 43 and is shown in Fig. 4A. From step S25, control is passed on to step S30.

If in step S24 the application property is not found to be representative of the news program, step S26 is reached. In step S26, the acceptable picture quality determination unit 42 checks to determine whether the application property acquired in step S21 is representative of the baseball telecast. If in step S26 the application property is found to represent the baseball telecast, the acceptable picture quality determination unit 42 goes to step S27. In step S27, the acceptable picture quality determination unit 42 adopts D₃ as the minimum acceptable picture quality by referencing the table which resides in the database 43 and is shown in Fig. 4A. From step S27, control is passed on to step S30.

If in step S26 the application property is not found to be representative of the baseball telecast, step S28 is reached. In step S28, the acceptable picture quality determination unit 42 checks to determine whether the application property acquired in step S21 is representative of the soccer telecast. If in step S28 the application property is found to represent the soccer telecast, the acceptable picture quality determination unit 42 goes to step S29. In step S29, the acceptable picture quality determination unit 42 adopts D₄ as the minimum acceptable picture quality by referencing the table which resides in the database 43 and is shown in Fig. 4A. From step S29, control is passed on to step S30.

If in step S28 the application property is not found to be representative of the soccer telecast, step S30 is also reached. In step S30, the acceptable picture quality determination unit 42 calculates the picture motion m1 from the video data supplied by the picture acquisition unit 21. By referencing the relations between the picture motion m and the minimum acceptable picture quality D held in the database 43 and shown in Fig. 4B, the acceptable picture quality determination unit 42 adopts Dₘ₁ as the minimum acceptable picture quality corresponding to the calculated picture motion m1. Step S30 is followed by step S31.

In step S31, the acceptable picture quality determination unit 42 determines a definitive minimum acceptable picture quality D based on both the minimum acceptable picture quality Dᵢ (i = one of 1 through 4) calculated from the application property and on the minimum acceptable picture quality Dₘ₁ derived from the picture motion m1. The minimum acceptable picture quality D thus determined is supplied to the transmission rate determination unit 44, and control is returned to the process of Fig. 6. If D₁ is less than Dₘ₁ and if the application property supplied from the operation unit 27 to the acceptable picture quality determination unit 42 is representative of the teleconference, then the picture quality Dₘ₁ is determined as the ultimate minimum acceptable picture quality D. That is because the picture quality Dₘ₁ is the higher of the minimum acceptable picture quality D₁ adopted in step S23 and the minimum acceptable picture quality Dₘ₁ adopted in step S30.

Referring to the flowchart of Fig. 8, the initial transmission rate determining process performed by the transmission rate determination unit 44 in step S3 of Fig. 6 will now be described.

In step S51, the transmission rate determination unit 44 acquires the user-designated video data encoding method supplied from the operation unit 27. From step S51, control is passed on to step S52.

In step S52, the transmission rate determination unit 44 checks to determine whether the encoding method acquired in step S51 is MPEG-4, i.e., whether the pictures sent by the transmitting apparatus 11 to the receiving apparatus 13 are encoded using the MPEG-4 standard. If in step S52 the pictures sent by the transmitting apparatus 11 to the receiving apparatus 13 are not found to be encoded using the MPEG-4 standard, step S53 is reached. In step S53, the transmission rate determination unit 44 checks to determine whether the pictures sent by the transmitting apparatus 11 to the receiving apparatus 13 are encoded using the JPEG 2000 standard.

If in step S53 the pictures sent by the transmitting apparatus 11 to the receiving apparatus 13 are not found to be encoded using the JPEG 2000 standard, then the transmission rate determination unit 44 determines an initial transmission rate B_{D} as the default, supplies it to the rate control unit 25, and terminates the process. The situation in which neither MPEG-4 nor JPEG 2000 applies occurs illustratively when the user fails to designate any encoding method. In such a case, the transmission rate determination unit 44 may select as the initial transmission rate B_{D} the lowest transmission rate relative to the minimum acceptable picture quality D supplied from the acceptable picture quality determination unit 42. The selection is made with respect to the relational expressions (in Figs. 5A and 5B) prepared beforehand in the transmission rate determination unit 44, the expressions defining the relations between picture qualities and transmission rates.

If in step S53 the pictures sent by the transmitting apparatus 11 to the receiving apparatus 13 are found to be encoded using the JPEG 2000 standard, step S55 is reached. In step S55, the transmission rate determination unit 44 checks to determine whether the pictures acquired by the picture acquisition unit 21 have the SD size.

If in step S55 the pictures acquired by the picture acquisition unit 21 are found to have the SD size, step S56 is reached. In step S56, the transmission rate determination unit 44 selects the function B = f_{c}(D) shown in Fig. 5B, and goes to step S61.

If in step S55 the pictures acquired by the picture acquisition unit 21 are not found to have the SD size, i.e., if the pictures are found to have the SIF size, then step S57 is reached. In step S57, the transmission rate determination unit 44 selects the function B = f_{d}(D) shown in Fig. 5B, and goes to step S61.

If in step S52 the pictures sent by the transmitting apparatus 11 to the receiving apparatus 13 are found to be encoded using the MPEG-4 standard, step S58 is reached. In step S58, the transmission rate determination unit 44 checks to determine whether the pictures acquired by the picture acquisition unit 21 have the SD size.

If in step S58 the pictures acquired by the picture acquisition unit 21 are found to have the SD size, step S59 is reached. In step S59, the transmission rate determination unit 44 selects the function B = fₐ(D) shown in Fig. 5A, and goes to step S61.

If in step S58 the pictures acquired by the picture acquisition unit 21 are not found to have the SD size, i.e., if the pictures are found to have the SIF size, then step S60 is reached. In step S60, the transmission rate determination unit 44 selects the function B = f_{b}(D) shown in Fig. 5A, and goes to step S61.

In step S61, using the function selected in step S56, S57, S59, or S60, the transmission rate determination unit 44 calculates the transmission rate B corresponding to the minimum acceptable picture quality D supplied from the acceptable picture quality determination unit 42. Thereafter, control is returned to the process of Fig. 6.

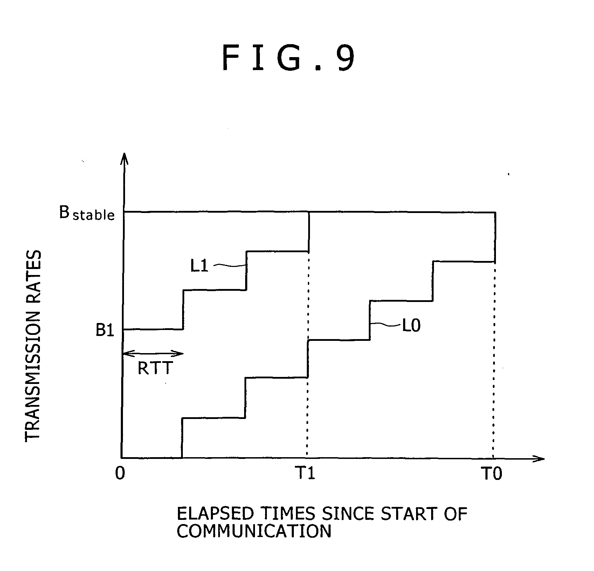

Fig. 9 is a graphic representation showing relations between the elapsed time since the start of video data transmission by the transmitting apparatus 11 of Fig. 1 on the one hand and transmission rates on the other hand, as well as relations between the elapsed time since the start of video data transmission by a conventional setup on the one hand and transmission rates on the other hand. The conventional setup involves starting the transmitting process with a single packet and incrementing the number of transmitted packets by one every time an acknowledgement (ACK) has been returned from the receiver side.

A line L1 represents the relations between the elapsed time since the start of data transmission by the transmitting apparatus 11 of Fig. 1 on the one hand and transmission rates on the other hand. The transmitting apparatus 11 starts communication (i.e., video data transmission) at an initial transmission rate B₁. On receiving an acknowledgement upon elapse of a time period RTT, the transmitting apparatus 11 raises the transmission rate by a predetermined level and proceeds to carry out the next transmission. This transmission rate control is repeated by the transmitting apparatus 11 given the feedback information corresponding to the transmitted packets. As a result, a stable transmission rate B_{stable} is reached a time period T1 after the start of data transmission. If the transmitting apparatus 11 starts communication (i.e., video data transmission) at the initial transmission rate B₁ and fails to receive the feedback information corresponding to the transmitted packets due to traffic status on the network 12, i.e., if a communication time-out has occurred during the first data transmission, the transmitting apparatus 11 may repeat the first transmission by establishing half the initial transmission rate B₁ (i.e., (B₁)/2) as the initial transmission rate.

Another line L0 denotes the relations between the elapsed time since the start of data transmission by the conventional setup on the one hand and transmission rates on the other hand. The transmission rate at the start of transmission is zero. When an acknowledgement is received upon elapse of the time period RTT, the transmission rate is raised by a predetermined level for the next transmission. This transmission rate control is repeated in response to the feedback information corresponding to the transmitted packets in a manner similar to how the inventive transmitting apparatus 11 carries out its communication. As a result, the stable transmission rate B_{stable} is reached a time period T0 after the start of data transmission, which is later than the time T1.

As described above, the transmitting apparatus 11 reduces the time required to reach the stable transmission rate B_{stable} by a time period (T0-T1) compared with the conventional setup. In the example of Fig. 9, the transmission rate is shown raised by the same predetermined level every time feedback information is received. In practice, however, the amount of the rise in the transmission rate is varied every time the transmitting apparatus 11, given the feedback information from the receiving apparatus 13, causes the rate control unit 25 to determine the transmission rate for the next data transmission to the receiving apparatus 13 (the same applies to the conventional setup as well).

Also with regard to the example of Fig. 9, the time period RTT (a plateau period in which the transmission rate remains unchanged on the staggered lines L1 and L2) following each transmission of video data until the receipt of an acknowledgement (feedback information) was indicated as constant. In practice, however, each time period RTT varies illustratively depending on the traffic status of the network 12. The longer the time period RTT, the greater the difference between the scheme of this invention and the conventional setup in terms of how long it takes to reach the stable transmission rate B_{stable} (i.e., time (T0-T1)). In other words, the inventive scheme is more effective at averting the slow-start problem. A typical situation in which the time period RTT is prolonged is where data transmissions are carried out via satellite.

Obviously, the higher the initial transmission rate B₁ (Fig. 9) determined by the initial rate determination unit 24, the more effective the transmitting apparatus 11 is in circumventing the slow-start problem as opposed to the conventional setup.

According to this invention, as described above, the transmission rate that satisfies the minimum acceptable picture quality is determined as the initial transmission rate. When the transmission of data is started at the initial transmission rate thus determined, it is possible to bypass the slow-start problem that has plagued data transmissions.

According to the invention, there is no need for the sender side to send to the receiver side a packet for measuring the bandwidth on the network and to wait for an outcome of the transmission (i.e., feedback information) from the receiver side. That means data can be transmitted without delay.

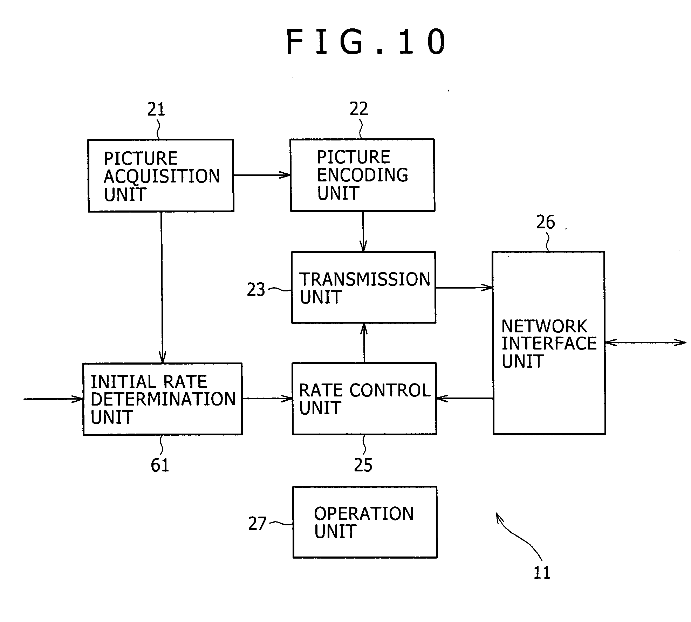

Fig. 10 is a block diagram showing a typical structure of the transmitting apparatus 11 practiced as the second embodiment of the invention. Of the reference numerals in Fig. 10, those already used in Fig. 2 designate like or corresponding parts, and descriptions of these parts will be omitted where redundant. More specifically, the transmitting apparatus 11 in Fig. 10 has basically the same structure as that of its counterpart in Fig. 2 except that the initial rate determination unit 24 is replaced by another initial rate determination unit 61.

As in the case of the initial rate determination unit 24 in Fig. 2, the initial rate determination unit 61 in Fig. 10 is supplied with the property of pictures that are acquired by the picture acquisition unit 21 or sent from outside the apparatus 11. Like the initial rate determination unit 24 in Fig. 2, the initial rate determination unit 61 is fed with information indicating the encoding method designated by the user manipulating the operation unit 27, the information coming from the operation unit 27. Like the initial rate determination unit 24 of Fig. 2, the initial rate determination unit 61 determines the minimum acceptable picture quality based on the picture property and encoding method in effect, decides on the transmission rate that satisfies the minimum acceptable picture quality thus determined, and supplies the rate to the rate control unit 25 as the initial transmission rate.

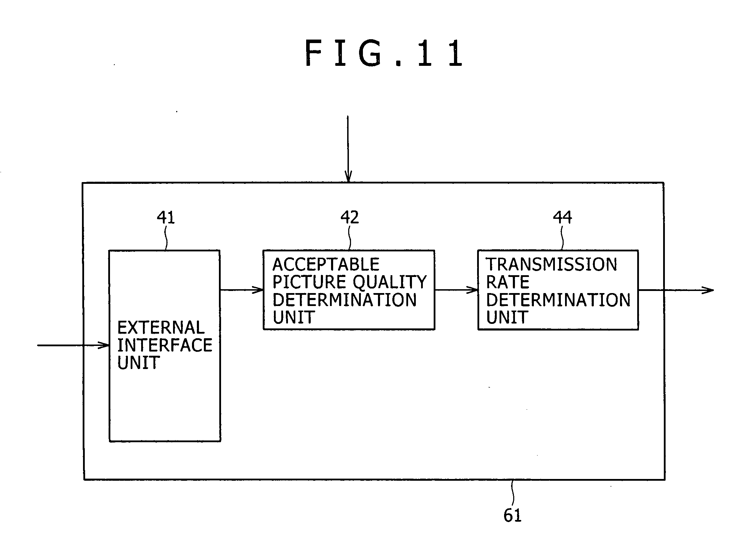

Fig. 11 shows a typical internal structure of the initial rate determination unit 61 in Fig. 10. Of the reference numerals in Fig. 11, those already used in Fig. 3 designate like or corresponding parts, and descriptions of these parts will be omitted where redundant. More specifically, the initial rate transmission unit 61 in Fig. 11 has basically the same structure as that of its counterpart in Fig. 3 in which the external interface unit 41, acceptable picture quality determination unit 42, and transmission rate determination unit 44 are the same as those in Fig. 3.

What makes the initial rate determination unit 61 in Fig. 10 of the second embodiment different from its counterpart in Fig. 3 is the absence of the database 43 as part of the first embodiment. With the first embodiment, the table associating application properties with minimum acceptable picture qualities and the data representing relations between picture motions and the minimum acceptable picture qualities, shown in Figs. 4A and 4B, are supplied from the database 43 to the acceptable picture quality determination unit 42. With the second embodiment, by contrast, the table and the data are supplied to the acceptable picture quality determination unit 42 from outside the transmitting apparatus 11 via the external interface unit 41.

That is, the external interface unit 71 is supplied, from outside the transmitting apparatus 11, with the same table associating application properties with minimum acceptable picture qualities and the same data representing relations between picture motions and the minimum acceptable picture qualities as those retrieved from the database 43 shown in Fig. 3. From the external interface unit 71, the table and the data are forwarded to the acceptable picture quality determination unit 42.

Illustratively, the external interface unit 41 may be a network interface similar to the network interface unit 26 of Fig. 9. It is assumed that the external interface unit 41 is connected to a server (not shown) on a network such as the Internet. The server is assumed to retain the table associating application properties with minimum acceptable picture qualities as well as the data representing relations between picture motions and the minimum acceptable picture qualities, with the stored table and data updated as needed. The external interface unit 41 retrieves such table and relational data from a source external to the transmitting apparatus 11 and forwards what is retrieved to the acceptable picture quality determination unit 42.

In the same manner as with the first embodiment of Fig. 3, the acceptable picture quality determination unit 42 determines the minimum acceptable picture quality and supplies it to the transmission rate determination unit 44. That is, based on the table associating application properties with minimum acceptable picture qualities supplied from the external interface unit 41, the acceptable picture quality determination unit 42 determines the minimum acceptable picture quality Dᵢ (i = one of 1 through 4) corresponding to the application property sent from the operation unit 27. If the picture motion is calculated at m1 from the video data supplied by the picture acquisition unit 21, the acceptable picture quality determination unit 42 determines the minimum acceptable picture quality Dₘ₁ based on the picture motion m1 through the use of the relationship D = fₓ(m) which comes from the external interface unit 41 and is shown in Fig. 4B. Then the acceptable picture quality determination unit 42 decides on the definitive minimum acceptable picture quality D and supplies it to the transmission rate determination unit 44.

In the same manner as with the first embodiment in Fig. 3, the transmission rate determination unit 44 determines the transmission rate that satisfies the minimum acceptable picture quality sent from the acceptable picture quality determination unit 42, and supplies the rate to the rate control unit 25 (Fig. 9) as the initial transmission rate.

With the above-described second embodiment of this invention, the table associating application properties with minimum acceptable picture qualities and the data denoting relations between picture motions and the minimum acceptable picture qualities were shown supplied from outside the transmitting apparatus 11 through the external interface unit 71 as the basis on which the acceptable picture quality determination unit 42 determines the minimum acceptable picture quality. Alternatively, the user (i.e., the person who has video data transmitted or received) may explicitly set the minimum acceptable picture quality that may be sent to the acceptable picture quality determination unit 42 via the external interface unit 71. As another alternative, the user may explicitly establish the minimum acceptable picture quality by manipulating the operation unit 27. In turn, the operation unit 27 supplies the established quality to the acceptable picture quality determination unit 42. If the user explicitly sets the minimum acceptable picture quality, the acceptable picture quality determination unit 42 forwards the supplied picture quality unchanged to the transmission rate determination unit 44.

Where the second embodiment is in use, any updates made from numerous experiments and experience to the table associating application properties with minimum allowable picture qualities and to the data denoting relations between picture motions and the minimum allowable picture qualities may be supplied without delay to the acceptable picture quality determination unit 42 via the external interface unit 71. In terms of up-to-dateness, the second embodiment is thus preferred to the first embodiment in which the database 43 is set up inside the transmitting apparatus 11.

The second embodiment of the above-described structure provides the same effects (shown in Fig. 9) as those offered by the first embodiment. That is, where streaming data is to be transmitted, the transmission rate that satisfies the minimum acceptable picture quality is determined as the initial transmission rate so that transmission of the data is started at that initial rate. This arrangement provides data transmission in such a manner as to avert the slow-start problem. It is also possible to transmit data without delay because there is no need for the sender side to send to the receiver side a packet for measuring the bandwidth on the network and to wait for the result of the transmission (feedback information) from the receiver side.

In the above-described embodiments of the invention, the transmitting apparatus 11 was shown transmitting video data. However, this is not limitative of the invention. Alternatively, this invention applies to setups whereby diverse kinds of streaming data including moving pictures, still pictures, sounds, presentation data, and video games are transmitted. It is also possible for the transmitting apparatus 11 to send data other than streaming data.

In the embodiments described above, the application property and the imaging device property were shown supplied by the user manipulating the operation unit 27 or sent from outside the transmitting apparatus 11 through the external interface unit 41. Alternatively, the transmitting apparatus 11 may be arranged to determine by itself these properties based on the pictures acquired by the picture acquisition unit 21.

In the above embodiments, the picture size was shown determined by the transmission rate determination unit 44 based on the video data supplied from the picture acquisition unit 21. Alternatively, the picture size may be designated by the user manipulating the operation unit 27. In turn, the operation unit 27 feeds the designated picture size to the initial rate determination unit 61.

In the embodiments above, the picture encoding method was shown designated by the user manipulating the operation unit 27. Alternatively, an appropriate encoding method may be established beforehand as the default. Only when the user designates a different encoding method, the designated method may be replaced therewith.

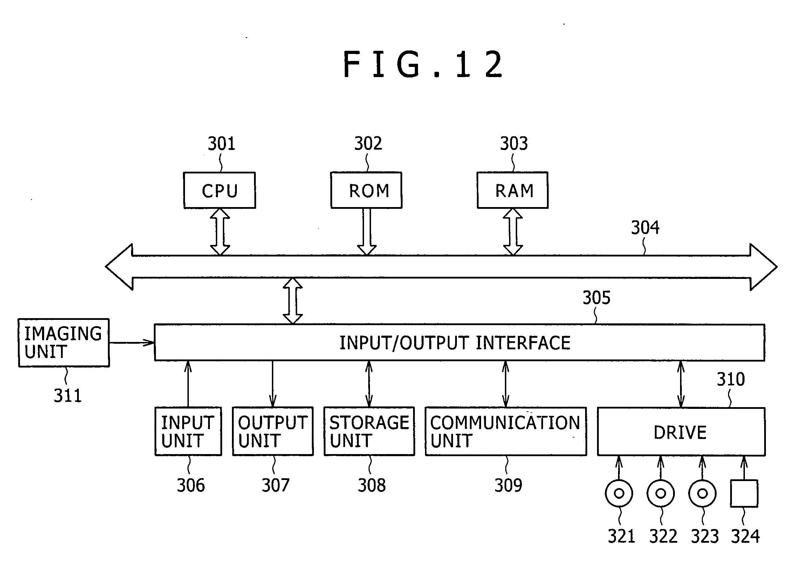

The series of steps and processes described above may be executed either by hardware or by software. In any case, the transmitting apparatus 11 may be constituted illustratively by a personal computer such as one shown in Fig. 12.

In Fig. 12, a CPU (Central Processing Unit) 301 performs diverse processes in keeping with the programs stored in a ROM (Read Only Memory) 302 or with those loaded into a RAM (Random Access Memory) 303 from a storage unit 308. The RAM 303 also accommodates data that may be needed by the CPU 301 in carrying out its processing.

The CPU 301, ROM 302, and RAM 303 are interconnected via a bus 304. An input/output interface 305 is also connected to the bus 304.

The input/output interface 305 is connected with diverse components. They include an input unit 306 formed illustratively by a keyboard and mouse, an output unit 307 constituted by a display device such as a CRT (Cathode Ray Tube) or an LCD (Liquid Crystal Display) as well as by speakers, the storage unit 308 composed of a hard disk drive or the like, a communication unit 309 having a modem and a terminal adapter, and an imaging unit 331 made up of image devices such as CCD (Charge Coupled Devices) or CMOS (Complementary Metal Oxide Semiconductors). The communication unit 309 performs communications over the network such as the Internet. The imaging unit 311 takes pictures of an object and supplies the CPU 301 and related components with video data representative of the imaged object by way of the input/output interface 305. The CPU 301 controls illustratively the processes performed by the acceptable picture quality determination unit 42 and transmission rate determination unit 44 in the initial rate determination unit 24 as well as by the picture encoding unit 22, transmission unit 23, and rate control unit 25. The communication unit 309 controls the processes carried out by the network interface unit 26 and by the external interface unit 41 in the initial rate determination unit 24, among others.

The input/output interface 305 is further connected with a drive 310 as needed. A recording medium such as a magnetic disk 321, an optical disk 322, a magneto-optical disk 323, or a semiconductor memory 324 is loaded into the drive 310. Computer programs may be retrieved from the loaded recording medium and installed as needed into the storage unit 308.

In this description, the steps which are stored on the recording medium and which describe the programs to be executed represent not only the processes that are to be carried out in the depicted sequence (i.e., on a time series basis) but also processes that may be performed parallelly or individually.

### Industrial Applicability

According to the above-described transmission controlling apparatus, transmission controlling method, recording medium, and program of this invention, it is possible to start transmitting data over the network instantaneously while circumventing the slow-start problem using the inventive arrangements.

## Claims

1. A transmission controlling apparatus for controlling transmission of data, the apparatus comprising:
quality determining means for determining quality of said data in keeping with a property of said data;
transmission rate determining means for determining a transmission rate in accordance with the quality determined by said quality determining means; and
transmission rate controlling means for controlling the transmission rate of said data so that said data will start to be transmitted at the transmission rate determined by said transmission rate determining means.

2. The transmission controlling apparatus according to claim 1, wherein said data constitutes pictures, and the property of said data is a picture property.

3. The transmission controlling apparatus according to claim 2, wherein said picture property is at least one of an application property, a content property, and an imaging device property.

4. The transmission controlling apparatus according to claim 2, further comprising storing means for storing the data of which the quality is associated with said picture property;
wherein said quality determining means determines said quality based on the data stored in said storing means.

5. The transmission controlling apparatus according to claim 1, wherein said data constitutes pictures encoded by a predetermined encoding method; and
wherein said transmission rate determining means determines said transmission rate based on a picture size of said pictures and on a relationship between the quality associated with said encoding method on the one hand and said transmission rate on the other hand.

6. The transmission controlling apparatus according to claim 1, further comprising information inputting means for inputting information about the property of said data from outside of said transmission controlling apparatus;
wherein said quality determining means determines said quality in accordance with said information input by said information inputting means.

7. The transmission controlling apparatus according to claim 1, wherein said transmission rate controlling means controls the transmission rate of said data so that after the transmission of said data has started, the rate of said transmission will not be lowered below said transmission rate supplied from said transmission rate determining means.

8. The transmission controlling apparatus according to claim 1, wherein said transmission rate controlling means controls the transmission rate of said data so that in case of a communication time-out of said data, the transmission of said data will be resumed at the transmission rate determined by said transmission rate determining means.

9. A transmission controlling method for controlling transmission of data, the method comprising the steps of:
determining quality of said data in keeping with a property of said data;
determining a transmission rate in accordance with the quality determined in said quality determining step; and
controlling the transmission rate of said data so that said data will start to be transmitted at the transmission rate determined in said transmission rate determining step.

10. A recording medium which stores in computer-readable fashion a program for controlling transmission of data, said program comprising the steps of:
determining quality of said data in keeping with a property of said data;
determining a transmission rate in accordance with the quality determined in said quality determining step; and
controlling the transmission rate of said data so that said data will start to be transmitted at the transmission rate determined in said transmission rate determining step.

11. A program for controlling transmission of data and for causing a computer to execute a procedure comprising the steps of:
determining quality of said data in keeping with a property of said data;
determining a transmission rate in accordance with the quality determined in said quality determining step; and
controlling the transmission rate of said data so that said data will start to be transmitted at the transmission rate determined in said transmission rate determining step.
